# EUROPEAN PATENT APPLICATION

(11) **EP 4 810 289 A1**
(43) Date of publication of application: **23.09.2026**
(21) Application number: 24890484.9
(22) Date of filing: 28.10.2024
(51) Int. Cl.: B60K 6/36

(54) **HYBRID POWER TRANSMISSION DEVICE AND SYSTEM THEREOF, HYBRID POWER SYSTEM, AND VEHICLE**

(30) Priority: 17.11.2023 CN 202311546023
(71) Applicant: BYD Company Limited, Shenzhen, Guangdong 518118 (CN)
(72) Inventor: LIU, Guilian, Shenzhen, Guangdong 518118 (CN); GAO, Xiaokang, Shenzhen, Guangdong 518118 (CN); MU, Jinhui, Shenzhen, Guangdong 518118 (CN); SONG, Ziyuan, Shenzhen, Guangdong 518118 (CN); YAO, Yan, Shenzhen, Guangdong 518118 (CN)
(74) Representative: Mathys & Squire
(86) International application number: PCT/CN2024/127911
(87) International publication number: WO 2025/103127

(57) **Abstract**

A hybrid power transmission device, a hybrid power system, and a vehicle. The vehicle comprises the hybrid power system. The hybrid power system comprises the hybrid power transmission device. The hybrid power transmission device comprises: an input shaft, adapted to be connected to an engine; an output shaft which is connected to the input shaft by means of a first transmission system, wherein one of the input shaft and the output shaft is further adapted to be connected to a first motor; and a clutch part used for selectively outputting power of the engine and the first motor by means of the output shaft, wherein the clutch part is arranged on the output shaft.

## Description

### CROSS-REFERENCE TO RELATED APPLICATIONS

The present disclosure claims priority to Chinese Patent Application No. 202311546023.8, filed on November 17, 2023, and the invention title of "HYBRID POWER TRANSMISSION DEVICE, HYBRID POWER SYSTEM AND VEHICLE", which is incorporated herein by reference in its entirety.

### FIELD

The present disclosure relates to the field of vehicle technology, and in particular, to a hybrid power transmission device, a hybrid power system and a vehicle.

### BACKGROUND

Hybrid vehicles combine the advantages of a traditional internal combustion engine and an electric motor dual-power system to provide high fuel efficiency, reduce exhaust emissions, and deliver an efficient driving experience.

The hybrid architecture of a vehicle can achieve various power modes such as simple independent drive or hybrid drive through multiple power sources. In related technologies, to achieve switching between different power modes and gear shifts, clutches are usually arranged on transmission shafts. However, the engine also occupies axial space on the transmission shaft, leading to cramped arrangement space for the clutches or related transmission components, causing insufficient internal space in the hybrid transmission or excessively large space occupied by the entire transmission in the vehicle.

### SUMMARY

An object of the present disclosure is to provide a hybrid power transmission device, a hybrid power system and a vehicle to at least partially solve the problems in the above related technologies.

To achieve the above object, a first aspect of the present disclosure provides a hybrid power transmission device. The hybrid power transmission device includes an input shaft configured to be connected to an engine; an output shaft connected to the input shaft via a first transmission system, wherein one of the input shaft and the output shaft is further configured to be connected to a first motor; and a clutch assembly configured to selectively output power of the engine and the first motor through the output shaft, wherein the clutch assembly is arranged on the output shaft.

In an embodiment, the clutch assembly includes a first clutch configured to selectively engage an output gear loosely sleeved on the output shaft with the output shaft; and a second clutch configured to selectively output power of the engine and/or the first motor through the output shaft.

In an embodiment, the first clutch and the second clutch are integrally mounted on the output shaft.

In an embodiment, the input shaft includes a first shaft section configured to be connected to the engine and a second shaft section configured to be connected to the first motor, wherein one of the first shaft section and the second shaft section is loosely sleeved on the other.

In an embodiment, the first transmission system includes a first gear set connected between the first shaft section and the output shaft, and a second gear set connected between the second shaft section and the output shaft, wherein the first gear set and the second gear set respectively and selectively output power via the first clutch.

In an embodiment, the first gear set includes a first driving gear torsionally sleeved on the first shaft section; and a first driven gear loosely sleeved on the output shaft and meshed with the first driving gear, wherein the first driven gear is selectively engaged with the output shaft via the second clutch.

In an embodiment, the second gear set includes a second driving gear torsionally sleeved on the second shaft section; and a second driven gear torsionally sleeved on the output shaft and meshed with the second driving gear.

In an embodiment, the second gear set includes a third driving gear torsionally sleeved on the second shaft section; a third driven gear loosely sleeved on the output shaft and meshed with the third driving gear; a fourth driving gear torsionally sleeved on the second shaft section; a fourth driven gear loosely sleeved on the output shaft and meshed with the fourth driving gear; and a first synchronizer configured to engage at most one of the third driven gear and the fourth driven gear with the output shaft.

In an embodiment, a sleeve shaft is loosely sleeved on an outer side of the output shaft, the sleeve shaft is selectively engaged with the output shaft via the second clutch, and the first driven gear and the third driven gear are torsionally sleeved on the sleeve shaft.

In an embodiment, the output shaft is configured to be connected to the first motor.

In an embodiment, the first transmission system includes a third gear set connected between the input shaft and the output shaft, wherein the third gear set selectively transmits power to the output shaft via the second clutch.

In an embodiment, the third gear set includes a fifth driving gear loosely sleeved on the input shaft; a fifth driven gear loosely sleeved on the output shaft and meshed with the fifth driving gear; and a second synchronizer configured to selectively engage the fifth driving gear with the input shaft, wherein the fifth driven gear is selectively engaged with the output shaft via the second clutch.

In an embodiment, the first clutch and the second clutch are integrated into a dual clutch.

In an embodiment, the output shaft includes a third shaft section and a fourth shaft section, the dual clutch is arranged between the third shaft section and the fourth shaft section to selectively engage the third shaft section with the fourth shaft section, and the output gear is configured to be loosely sleeved on one of the third shaft section and the fourth shaft section.

In an embodiment, the first transmission system includes a fourth gear set connected between the input shaft and the third shaft section, and the fourth shaft section is configured to be connected to the first motor.

In an embodiment, the fourth gear set includes a sixth driving gear torsionally sleeved on the input shaft; and a sixth driven gear torsionally sleeved on the third shaft section and meshed with the sixth driving gear.

In an embodiment, the output shaft is configured to be connected to an axle via a second transmission system, the second transmission system includes a fifth gear set connected between the output shaft and the axle, and the fifth gear set includes the output gear.

A second aspect of the present disclosure provides a hybrid power system, including an engine; a first motor; and the hybrid power transmission device according to any one of the above.

In an embodiment, the hybrid power system further includes a second motor, wherein the engine and the first motor are configured to transmit power to a first axle; and the second motor is configured to output power to a second axle.

In an embodiment, the first motor is a GM motor, and the second motor is a TM motor.

A third aspect of the present disclosure provides a vehicle including the hybrid power system according to any one of the above.

Through the above technical solution, power of the engine and the first motor can be selectively output to the axle via the input shaft and the output shaft through connection and disconnection actions between the clutch assembly and the shafts to provide power for a vehicle body. Moreover, the clutch assembly is arranged on the output shaft, that is, arranged on a different axis from a power shaft of the engine, resulting in a more reasonable internal spatial layout of the hybrid power transmission device 100, saving space, and avoiding an excessively large vehicle drive space occupied by an overall device which affects structural stability.

Other features and advantages of the present disclosure will be described in detail in the subsequent detailed description.

### BRIEF DESCRIPTION OF THE DRAWINGS

The accompanying drawings are configured to provide a further understanding of the present disclosure and constitute a part of the specification. The accompanying drawings are configured together with the following detailed description to explain the present disclosure, but do not constitute a limitation to the present disclosure. In the drawings:
FIG. 1 is a schematic structural diagram of a hybrid power transmission device according to an exemplary embodiment.
FIG. 2 is a schematic structural diagram of a hybrid power transmission device according to an exemplary embodiment.
FIG. 3 is a schematic structural diagram of a hybrid power transmission device according to an exemplary embodiment.
FIG. 4 is a schematic structural diagram of a hybrid power transmission device according to an exemplary embodiment.
FIG. 5 is a schematic diagram of a power transmission path in a first motor drive mode according to the embodiment shown in FIG. 1.
FIG. 6 is a schematic diagram of a power transmission path in an engine drive mode according to the embodiment shown in FIG. 1.
FIG. 7 is a schematic diagram of a power transmission path in a parking power generation mode according to the embodiment shown in FIG. 1.
FIG. 8 is a schematic diagram of a power transmission path in a pure electric rear drive mode according to the embodiment shown in FIG. 1.
FIG. 9 is a schematic diagram of a power transmission path in a pure electric four-wheel drive mode according to the embodiment shown in FIG. 1.
FIG. 10 is a schematic diagram of a power transmission path in a parallel front drive mode according to the embodiment shown in FIG. 1.
FIG. 11 is a schematic diagram of a power transmission path in a parallel four-wheel drive mode according to the embodiment shown in FIG. 1.
FIG. 12 is a schematic diagram of a power transmission path in a parallel four-wheel drive mode according to the embodiment shown in FIG. 1.
FIG. 13 is a schematic diagram of a power transmission path in a series mode according to the embodiment shown in FIG. 1.

### DETAILED DESCRIPTION

Detailed descriptions of specific embodiments of the present disclosure are provided below with reference to the accompanying drawings. It should be understood that the specific embodiments described herein are only configured to illustrate and explain the present disclosure and are not intended to limit the present disclosure.

In the present disclosure, unless stated to the contrary, directional terms such as "front"or "rear" are defined according to a normal driving direction of a vehicle. Moreover, modifiers such as "first" or "second" used in the present disclosure are configured to distinguish one element from another and do not have order or importance. The term "connected" in the embodiments of the present disclosure, unless otherwise contradicted, may refer to a direct connection or an indirect connection.

When the following description involves the accompanying drawings, unless otherwise indicated, the same numerals in different drawings represent the same or similar elements.

Embodiments of the present disclosure provide a hybrid power transmission device, a hybrid power system and a vehicle. The vehicle provided in the embodiments of the present disclosure includes a hybrid power system, and the hybrid power system includes a hybrid power transmission device 100.

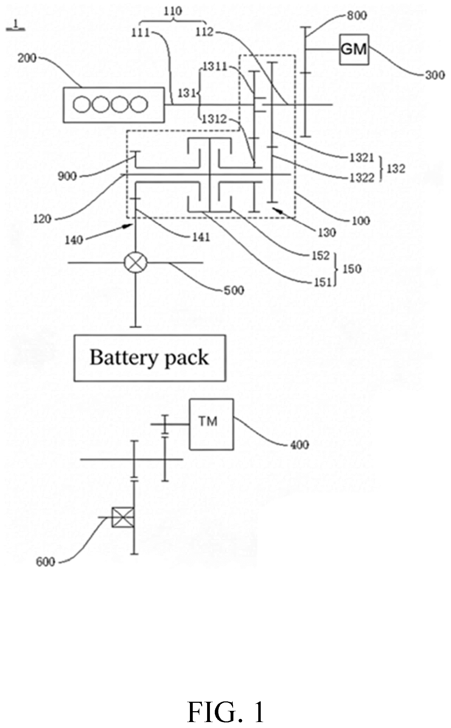

As shown in FIG. 1 to FIG. 4, a first aspect of the embodiments of the present disclosure provides a hybrid power transmission device 100, including an input shaft 110, an output shaft 120 and a clutch assembly 150. The input shaft 110 is capable of being connected to an engine 200. The output shaft 120 can be connected to the input shaft 110 via a first transmission system 130. Power in the engine 200 can be input via the input shaft 110, transmitted to the output shaft 120 via the first transmission system 130, and finally transmitted to an axle via the output shaft 120. Meanwhile, one of the input shaft 110 and the output shaft 120 can also be connected to a first motor 300. The first motor 300 can output power to the axle in a power transmission manner similar to that of the engine 200. To achieve power switching between the engine 200 and the first motor 300 to form various power output modes, a clutch assembly 150 can be arranged on the output shaft 120. The clutch assembly 150 can control power output paths of the engine 200 and the first motor 300 by connecting or disconnecting from the output shaft 120, so as to selectively output the power of the engine 200 and the first motor 300 to the axle via the output shaft 120.

Through the above technical solution, power of the engine 200 and the first motor 300 can be selectively output to the axle via the input shaft 110 and the output shaft 120 through connection and disconnection actions between the clutch assembly 150 and the shafts to provide power for a vehicle body. Meanwhile, the clutch assembly 150 is arranged on the output shaft 120, that is, arranged on a different axis from a power shaft (the input shaft 110) of the engine 200, making an internal spatial layout of the hybrid power transmission device 100 more reasonable, saving space, and avoiding an excessively large vehicle space occupied by the overall hybrid power transmission device 100 which affects structural stability.

As shown in FIG. 1 to FIG. 4, the clutch assembly 150 may include a first clutch 151 and a second clutch 152. The first clutch 151 may selectively engage an output gear 900 loosely sleeved on the output shaft 120 with the output shaft 120. The second clutch 152 may selectively output power of the engine 200 and/or the first motor 300 through the output shaft 120. The output gear 900 is configured to finally transmit the power of the hybrid power transmission device 100 to the axle. In this process, the output shaft 120 can receive power from the engine 200 or the first motor 300 and output power through engagement of the first clutch 151 with the output gear 900. When the second clutch 152 is engaged, power can be transmitted to the output shaft 120. Through the engagement of the first clutch 151 with the output gear 900, the power of the output shaft 120 is output via the output gear 900.

In some embodiments, as shown in FIG. 1 to FIG. 3, the first clutch 151 and the second clutch 152 may be integrally mounted on the output shaft 120 to make a structure more compact. In this case, the first clutch 151 and the second clutch 152 may share a same housing, but internal structures of the first clutch 151 and the second clutch 152 may rotate simultaneously or relatively, and their functions do not affect each other. When there is direct power on the output shaft 120 and the second clutch 152 is not engaged, the first clutch 151 may rotate independently when the second clutch 152 is stationary. After the second clutch 152 is engaged and transmits power to the output shaft 120, the first clutch 151 may rotate simultaneously with the second clutch 152. When the output shaft 120 receives power from different transmission paths, the first clutch 151 may achieve differential rotation with the second clutch 152 to output a combined power of multiple power sources.

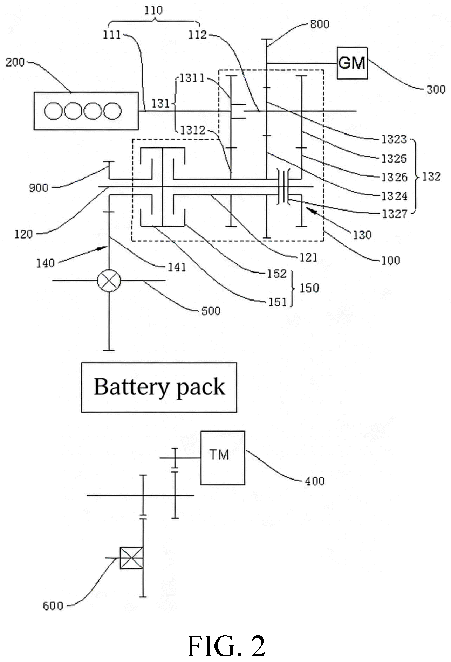

According to some embodiments, as shown in FIG. 1 and FIG. 2, the input shaft 110 may include a first shaft section 111 connected to the engine 200 and a second shaft section 112 configured to be connected to the first motor 300. One of the first shaft section 111 and the second shaft section 112 may be loosely sleeved on the other, so that the engine 200 and the first motor 300 respectively connected to the first shaft section 111 and the second shaft section 112 remain in a mutually non-interfering and relatively free parallel state. This allows the engine 200 and the first motor 300 to operate separately or simultaneously, increasing multiple operation modes of the hybrid power transmission device 100.

In some embodiments, as shown in FIG. 1 and FIG. 2, the first transmission system 130 may include a first gear set 131 connected between the first shaft section 111 and the output shaft 120, and a second gear set 132 connected between the second shaft section 112 and the output shaft 120. The first gear set 131 and the second gear set 132 may each output power selectively through the output shaft 120 via the first clutch 151. In this embodiment, the engine 200 and the first motor 300 are connected to the output shaft 120 via the first transmission system 130. The first gear set 131 and the second gear set 132 included in the first transmission system 130 may drivingly connect the engine 200 and the first motor 300 to the output shaft 120, so that after the power of the engine 200 and the first motor 300 is transmitted to the output shaft 120, the output shaft 120 can transmit the power to the output gear 900 engaged with the first clutch 151 via the first clutch 151, and then output the power to the axle via the output gear 900.

According to some embodiments, as shown in FIG. 1 and FIG. 2, the first gear set 131 may include a first driving gear 1311 and a first driven gear 1312. The first driving gear 1311 may be torsionally sleeved on the first shaft section 111. The first driven gear 1312 may be loosely sleeved on the output shaft 120 and remain meshed with the first driving gear 1311. The first driven gear 1312 may be selectively engaged with the output shaft 120 via the second clutch 152. After the second clutch 152 is engaged, the second clutch 152 can output the power of the engine 200 transmitted by the first driven gear 1312 to the output shaft 120.

It should be noted that "torsionally sleeved" means that a component is fixedly sleeved on an outer side of another component, so that the two can rotate synchronously. It should be understood that "torsional" means that there is no relative twisting or rotation between two components. The "torsional" sleeve connection described here and below refers to a connection between two structural elements having a sleeve relationship without generating relative rotation.

In an embodiment, as shown in FIG. 1, the second gear set 132 may include a second driving gear 1321 and a second driven gear 1322. The second driving gear 1321 may be torsionally sleeved on the second shaft section 112. The second driven gear 1322 may be torsionally sleeved on the output shaft 120 and remain meshed with the second driving gear 1321. In this embodiment, the second gear set 132 can directly transmit the power in the first motor 300 to the output shaft 120.

In some embodiments, as shown in FIG. 2, the second gear set 132 may include a third driving gear 1323, a third driven gear 1324, a fourth driving gear 1325, a fourth driven gear 1326 and a first synchronizer 1327. The third driving gear 1323 and the fourth driving gear 1325 may be torsionally sleeved on the second shaft section 112. The third driven gear 1324 and the fourth driven gear 1326 may be loosely sleeved on the output shaft 120. The third driven gear 1324 and the fourth driven gear 1326 may be meshed with the third driving gear 1323 and the fourth driving gear 1325, respectively. Meanwhile, at most one of the third driven gear 1324 and the fourth driven gear 1326 may be engaged with the output shaft 120 via the first synchronizer 1327. In this embodiment, different transmission ratios exist between the third driving gear 1323 and the third driven gear 1324 and between the fourth driving gear 1325 and the fourth driven gear 1326. When the first motor 300 is connected to the third driving gear 1323 and the fourth driving gear 1325 respectively, it can provide power at different gears. The first synchronizer 1327 can only engage one of the third driven gear 1324 or the fourth driven gear 1326 at the same time to transmit the power of the first motor 300 to the output shaft 120 via the first synchronizer 1327. The first synchronizer 1327 can transmit different powers from the first motor 300 to the output shaft 120 to realize one of the functions of vehicle 1 shifting.

According to some embodiments, as shown in FIG. 2, a sleeve shaft 121 may be loosely sleeved on an outer side of the output shaft 120. The sleeve shaft 121 may be selectively engaged with the output shaft 120 via the second clutch 152. The first driven gear 1312 and the third driven gear 1324 are torsionally sleeved on the outer side of the sleeve shaft 121. When the engine 200 outputs power through the first gear set 131, the power in the first gear set 131 may be transmitted to the sleeve shaft 121 connected to the first driven gear 1312. At this time, the sleeve shaft 121 may idle relative to the output shaft 120. When the second clutch 152 is engaged with the sleeve shaft 121, the power on the sleeve shaft 121 may be transmitted to the output shaft 120 via the second clutch 152. In addition, in such an embodiment, a route for the third driven gear 1324 to output power to the output shaft 120 may be the third driven gear 1324 - the second clutch 152 - the output shaft 120, or may be the third driven gear 1324 - the first synchronizer 1327 - the output shaft 120, which can be controlled according to system requirements.

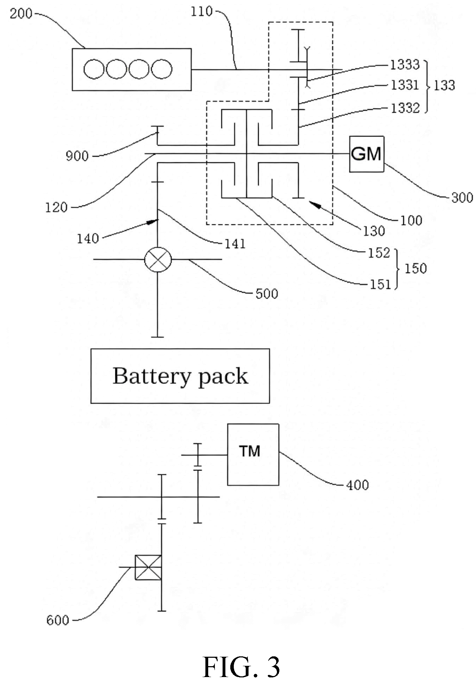

In some embodiments, as shown in FIG. 3, the output shaft 120 may be configured to be connected to the first motor 300. In this embodiment, the first motor 300 may be directly connected to the output shaft 120 without a transmission structure, and the power output by the first motor 300 may be directly transmitted to the output shaft 120, reducing power transmission loss.

According to some embodiments, as shown in FIG. 3, the first transmission system 130 may include a third gear set 133 connected between the input shaft 110 and the output shaft 120, wherein the third gear set 133 selectively transmits power to the output shaft 120 via the second clutch 152.

In an embodiment, as shown in FIG. 3, the third gear set 133 may include a fifth driving gear 1331, a fifth driven gear 1332 and a second synchronizer 1333. The fifth driving gear 1331 and the fifth driven gear 1332 may be loosely sleeved on the input shaft 110 and the output shaft 120, respectively, and remain meshed with each other. The fifth driving gear 1331 may be selectively engaged with the input shaft 110 via the second synchronizer 1333, so that the fifth driving gear 1331 can rotate coaxially with or be stationary relative to the input shaft. Meanwhile, the fifth driven gear 1332 may be selectively engaged with the output shaft 120 via the second clutch 152. In this embodiment, both the second synchronizer 1333 and the second clutch 152 can control the on/off of the power transmission of the engine 200. When power from the engine 200 is needed, the second synchronizer 1333 may engage the fifth driving gear 1331 with the input shaft 110. When power from the engine 200 is not needed, the second synchronizer 1333 may disconnect the connection between the fifth driving gear 1331 and the input shaft 110. Similarly, the second clutch 152 may achieve the same function as the second synchronizer 1333 by engaging or disengaging the fifth driven gear 1332 with the output shaft 120.

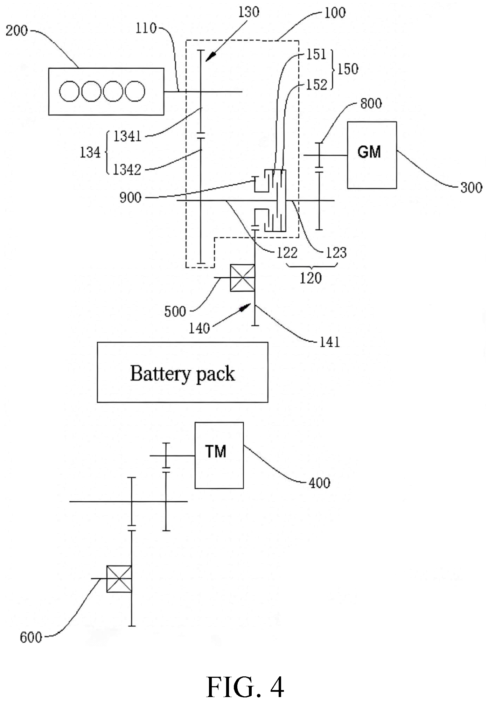

In some embodiments, as shown in FIG. 4, the first clutch 151 and the second clutch 152 may be integrated into a dual clutch. The dual clutch is a common configuration in the field, and its specific structure is not described redundantly here. The arrangement of the dual clutch can further save internal space of the hybrid power transmission device 100.

In an embodiment, the output shaft 120 may include a third shaft section 122 and a fourth shaft section 123. As shown in FIG. 4, the aforementioned dual clutch may be arranged between the third shaft section 122 and the fourth shaft section 123 to selectively engage the third shaft section 122 with the fourth shaft section 123. The output gear 900 may be loosely sleeved on one of the third shaft section 122 and the fourth shaft section 123. When one of the third shaft section 122 and the fourth shaft section 123 is loosely sleeved by the output gear 900, the other of the third shaft section 122 and the fourth shaft section 123 should be connected to the dual clutch. In the embodiment shown in FIG. 4, the output gear 900 is loosely sleeved on the third shaft section 122, and the fourth shaft section 123 is fixed to a housing of the clutch.

According to some embodiments, the first transmission system 130 may include a fourth gear set 134 connected between the input shaft 110 and the third shaft section 122, and the fourth shaft section 123 may be configured to be connected to the first motor 300. Taking FIG. 4 as an embodiment, the engine 200 transmits power from the input shaft 110 to the third shaft section 122 via the fourth gear set 134. At this time, the third shaft section 122 may be engaged with one side of the dual clutch. The other side of the dual clutch is connected to the first motor 300 via an input gear set which includes an input gear 800 connected to an output end of the first motor 300. When the output gear 900 is engaged with the dual clutch, if the third shaft section 122 is not engaged with the dual clutch, only the first motor 300 provides power. The first motor 300 can directly output power to the axle via the output gear 900. If the third shaft section 122 is simultaneously engaged with the dual clutch, the engine 200 and the first motor 300 can output power together. Meanwhile, when the output gear 900 is not engaged with the dual clutch and the third shaft section 122 is engaged with the dual clutch, the engine 200 can output energy to the first motor 300 via the dual clutch to enable a parking power generation mode when power of the first motor 300 is insufficient.

In an embodiment, as shown in FIG. 4, the fourth gear set 134 may include a sixth driving gear 1341 and a sixth driven gear 1342. The sixth driving gear 1341 and the sixth driven gear 1342 are torsionally sleeved on the input shaft 110 and the third shaft section 122, respectively, and the sixth driven gear 1342 remains meshed with the sixth driving gear 1341, so as to transmit the power from the engine 200 in the input shaft 110 to the third shaft section 122 via transmission.

In some embodiments, the output shaft 120 may be connected to an axle via a second transmission system 140. As shown in FIG. 1 to FIG. 4, the second transmission system 140 may include a fifth gear set 141 connected between the output shaft 120 and the axle. The fifth gear set 141 may include the output gear 900. When the output gear 900 is engaged with the first clutch 151, the power in the output shaft 120 may be output to the axle via the output gear 900 of the fifth gear set 141.

A second aspect of the embodiments of the present disclosure provides a hybrid power system, which may include an engine 200, a first motor 300, and the hybrid power transmission device 100 included in the above.

The embodiments of the present disclosure may further include a second motor 400. The engine 200 and the first motor 300 may drive one axle of a vehicle 1 and a pair of wheels connected thereto. The second motor 400 may drive another axle of the vehicle 1 and a pair of wheels connected thereto. It should be noted that the present disclosure does not limit a driving relationship of the engine 200 and the first motor 300 and the second motor 400 on front wheels or rear wheels. That is, the engine 200 and the first motor 300 may be configured for front-wheel drive, in which case the second motor 400 is configured for rear-wheel drive; or the engine 200 and the first motor 300 may be configured for rear-wheel drive, in which case the second motor 400 is configured for front-wheel drive. For convenience of description, the embodiments of the present disclosure are described by taking a case that the engine 200 and the first motor 300 are configured for front-wheel drive and the second motor 400 is configured for rear-wheel drive as an embodiment.

In an embodiment, the engine 200 and the first motor 300 may transmit power to a first axle 500. The second motor 400 may transmit power to a second axle 600. In this embodiment, the first axle 500 is connected to two front wheels of a vehicle body, and the second axle 600 is connected to two rear wheels of the vehicle body. When the first axle 500 is driven by the engine 200 and the first motor 300 simultaneously or separately, it is a front-wheel drive mode. When the second axle 600 is driven by the second motor 400, it is a rear-wheel drive mode. When both are driven simultaneously, it is a four-wheel drive mode.

Various working modes of the hybrid power transmission device 100 are exemplarily described below by taking a structure shown in FIG. 1 as an embodiment. The embodiments shown in FIG. 2 to FIG. 4 and other embodiments under a concept of the embodiments of the present disclosure have similar working manners, but specific number of modes may differ due to different specific architectures, which is not described redundantly here.

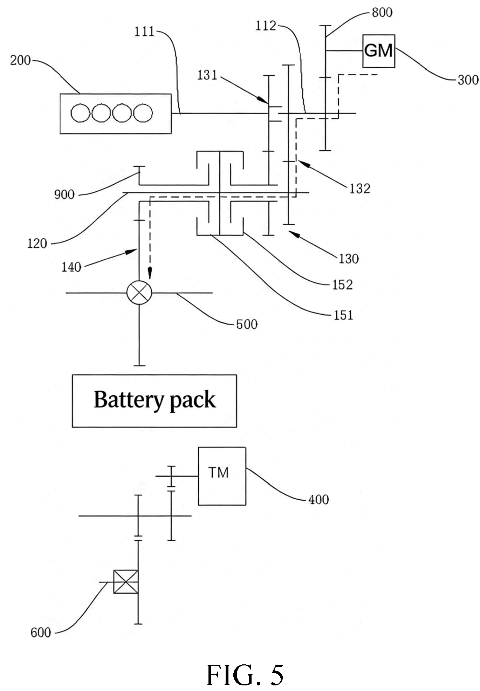

The hybrid power system may have a first motor drive mode, an engine drive mode, a parking power generation mode, a pure electric rear drive mode, a pure electric four-wheel drive mode, a parallel front drive mode, a parallel four-wheel drive mode, a series mode and an energy recovery mode. Dashed lines with arrows in FIG. 5 to FIG. 13 indicate power transmission routes.

In the first motor drive mode, the engine 200 does not work, the first motor 300 outputs power, and the second motor 400 does not work. At this time, the first clutch 151 is engaged, the second clutch 152 is disengaged, and the power of the first motor 300 is transmitted to the first axle 500. The power transmission path is shown in FIG. 5.

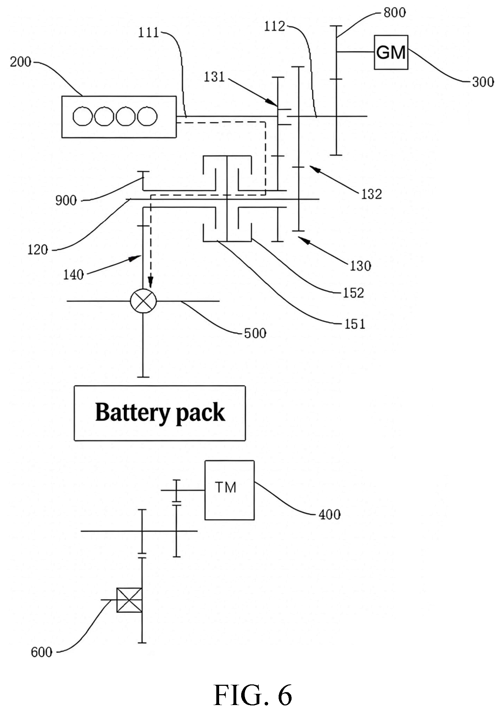

In the engine independent drive mode, the engine 200 outputs power, the first motor 300 does not work, and the second motor 400 does not work. At this time, the first clutch 151 is engaged, the second clutch 152 is engaged, and the power of the engine 200 is transmitted to the first axle 500. The power transmission path is shown in FIG. 6.

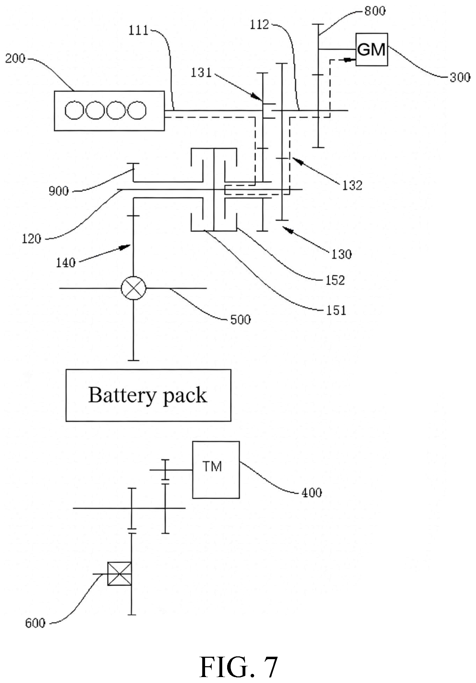

In the parking power generation mode, the engine 200 outputs power, the first motor 300 receives energy for charging, and the second motor 400 does not work. At this time, the first clutch 151 is disengaged, the second clutch 152 is engaged, and the power of the engine 200 is transmitted to the first motor 300. The power transmission path is shown in FIG. 7.

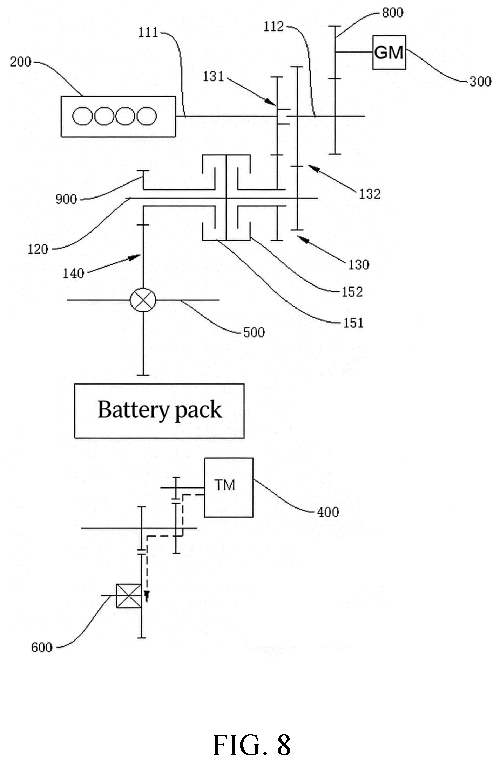

In the pure electric rear drive mode, the engine 200 does not work, the first motor 300 does not work, and the second motor 400 outputs power. At this time, the first clutch 151 is disengaged, the second clutch 152 is disengaged, and the power of the second motor 400 is transmitted to the second axle 600. The power transmission path is shown in FIG. 8.

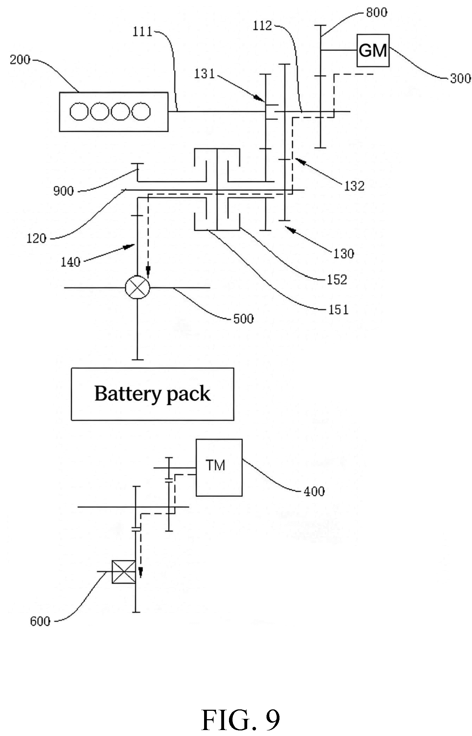

In the pure electric four-wheel drive mode, the engine 200 does not work, the first motor 300 outputs power, and the second motor 400 outputs power. At this time, the first clutch 151 is engaged, the second clutch 152 is disengaged, the power of the first motor 300 is transmitted to the first axle 500, and simultaneously the power of the second motor 400 is transmitted to the second axle 600. The power transmission path is shown in FIG. 9.

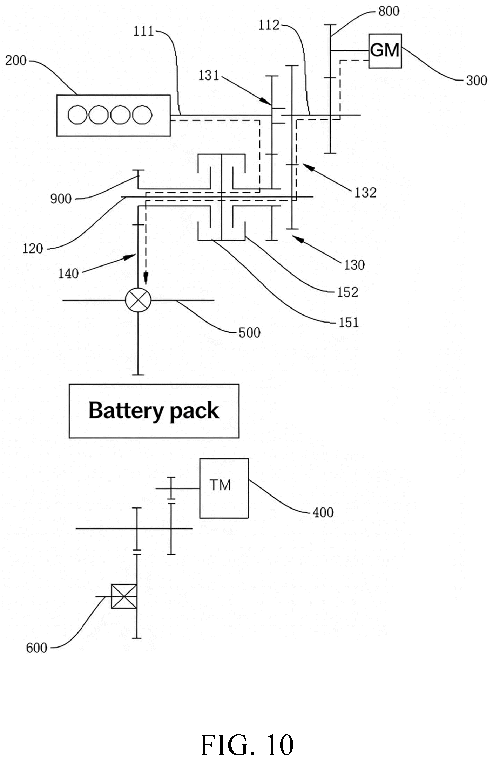

In the parallel front drive mode, the engine 200 outputs power, the first motor 300 outputs power, and the second motor 400 does not work. At this time, the first clutch 151 is engaged, the second clutch 152 is engaged, and the power of the engine 200 and the first motor 300 is transmitted to the first axle 500. The power transmission path is shown in FIG. 10.

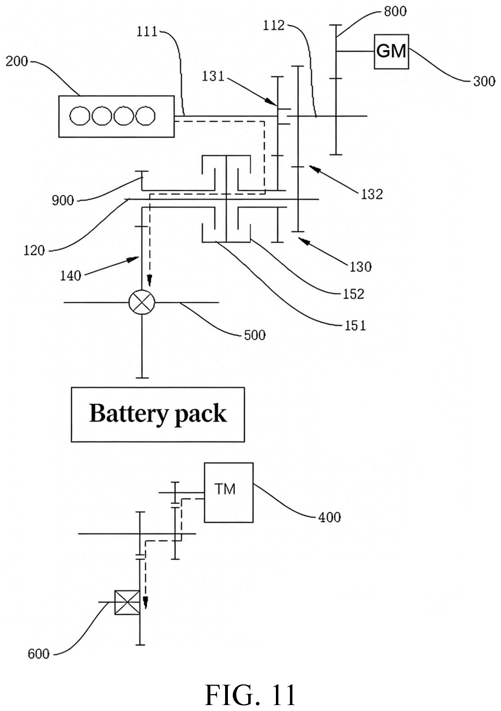

In the parallel four-wheel drive mode, the engine 200 outputs power, the first motor 300 does not work, and the second motor 400 outputs power. At this time, the first clutch 151 is engaged, the second clutch 152 is engaged, the power of the engine 200 is transmitted to the first axle 500, and simultaneously the power of the second motor 400 is transmitted to the second axle 600. The power transmission path is shown in FIG. 11.

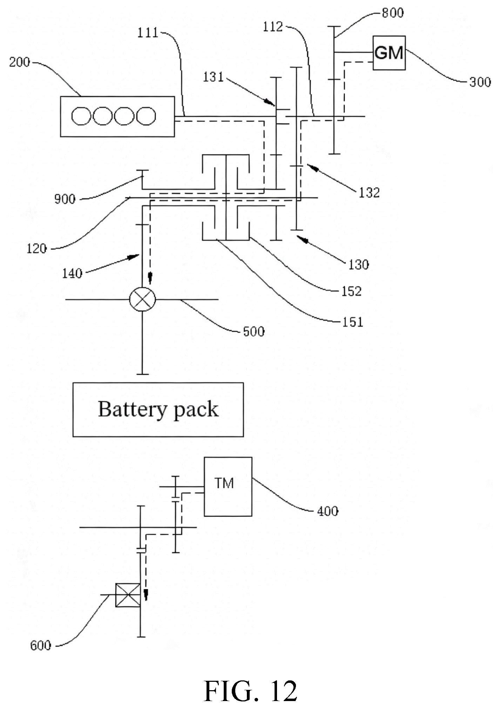

Alternatively, the engine 200 outputs power, the first motor 300 outputs power, and the second motor 400 outputs power. At this time, the first clutch 151 is engaged, the second clutch 152 is engaged, the power of the engine 200 and the first motor 300 is transmitted to the first axle 500, and simultaneously the power of the second motor 400 is transmitted to the second axle 600. The power transmission path is shown in FIG. 12.

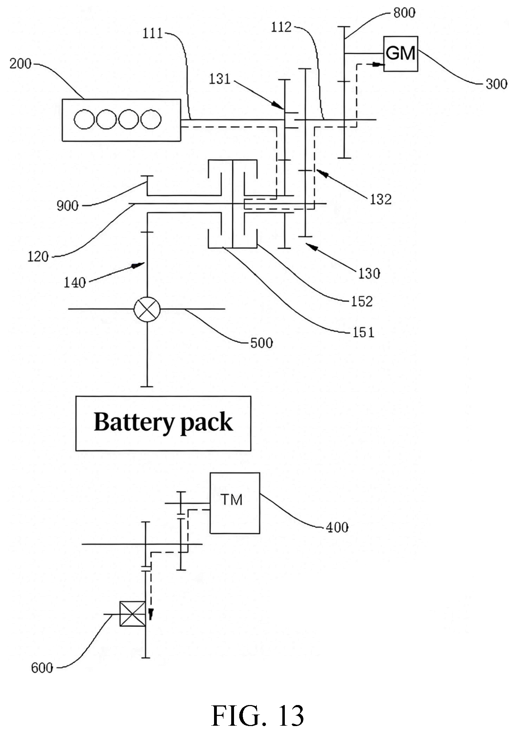

In the series mode, the engine 200 outputs power, the first motor 300 receives energy, and the second motor 400 outputs power. At this time, the first clutch 151 is disengaged, the second clutch 152 is engaged, the power of the engine 200 is transmitted to the first motor 300, and simultaneously the power of the second motor 400 is transmitted to the second axle 600. The power transmission path is shown in FIG. 13.

In the energy recovery mode, when the system detects that the vehicle 1 is coasting, decelerating or braking, excess energy output by the engine 200, the first motor 300 or the second motor 400 and kinetic energy in various transmission components in the system can be converted into electrical energy through control of the first axle 500 or the second axle 600 and related power devices thereon, and finally recovered to a battery pack, realizing energy recovery. Since the related structural arrangement for the energy recovery mode is a common configuration in the field, its specific structure is not described redundantly here.

In some embodiments, the first motor 300 may be selected as a GM motor (Generator-Motor), which can serve as a motor for power output or as a generator. The second motor 400 may be selected as a TM motor (Traction-Motor), serving as a drive motor. Both the GM motor and the TM motor are common configurations in the field, and their specific structures are not described redundantly here.

A third aspect of the embodiments of the present disclosure further provides a vehicle 1, which may include the above hybrid power system, and has all technical effects of the above hybrid power system, which are not described redundantly here.

The preferred embodiments of the present disclosure are described in detail above with reference to the accompanying drawings. However, the present disclosure is not limited to the specific details in the above embodiments. Within a scope of the technical concept of the present disclosure, various simple modifications can be made to the technical solution of the present disclosure, and these simple modifications all belong to the protection scope of the present disclosure.

In addition, it should be noted that the various specific technical features described in the above specific embodiments can be combined in any suitable manner without contradiction. To avoid unnecessary repetition, various possible combinations are not described separately in the present disclosure.

Moreover, various different embodiments of the present disclosure can also be combined arbitrarily, as long as they do not violate the idea of the present disclosure, and they should also be regarded as content disclosed in the present disclosure.

## Claims

1. A hybrid power transmission device (100), comprising:
an input shaft (110) configured to be connected to an engine (200);
an output shaft (120) connected to the input shaft (110) via a first transmission system (130), wherein one of the input shaft and the output shaft is further configured to be connected to a first motor (300); and
a clutch assembly (150) configured to selectively output power of the engine (200) and the first motor (300) through the output shaft (120), wherein the clutch assembly is arranged on the output shaft (120).

2. The hybrid power transmission device (100) according to claim 1, wherein the clutch assembly (150) comprises:
a first clutch (151) configured to selectively engage an output gear (900) loosely sleeved on the output shaft (120) with the output shaft (120); and
a second clutch (152) configured to selectively output power of the engine (200) and/or the first motor (300) through the output shaft (120).

3. The hybrid power transmission device (100) according to claim 2, wherein the first clutch (151) and the second clutch (152) are integrally mounted on the output shaft (120).

4. The hybrid power transmission device (100) according to claim 2 or 3, wherein the input shaft (110) comprises a first shaft section (111) configured to be connected to the engine (200) and a second shaft section (112) configured to be connected to the first motor (300), and one of the first shaft section (111) and the second shaft section (112) is loosely sleeved on the other.

5. The hybrid power transmission device (100) according to claim 4, wherein the first transmission system (130) comprises a first gear set (131) connected between the first shaft section (111) and the output shaft (120), and a second gear set (132) connected between the second shaft section (112) and the output shaft (120);
wherein the first gear set (131) and the second gear set (132) respectively and selectively output power via the first clutch (151).

6. The hybrid power transmission device (100) according to claim 5, wherein the first gear set (131) comprises:
a first driving gear (1311) torsionally sleeved on the first shaft section (111); and
a first driven gear (1312) loosely sleeved on the output shaft (120) and meshed with the first driving gear (1311);
wherein the first driven gear (1312) is selectively engaged with the output shaft (120) via the second clutch (152).

7. The hybrid power transmission device (100) according to claim 5 or 6, wherein the second gear set (132) comprises:
a second driving gear (1321) torsionally sleeved on the second shaft section (112); and
a second driven gear (1322) torsionally sleeved on the output shaft (120) and meshed with the second driving gear (1321).

8. The hybrid power transmission device (100) according to claim 6, wherein the second gear set (132) comprises:
a third driving gear (1323) torsionally sleeved on the second shaft section (112);
a third driven gear (1324) loosely sleeved on the output shaft (120) and meshed with the third driving gear (1323);
a fourth driving gear (1325) torsionally sleeved on the second shaft section (112);
a fourth driven gear (1326) loosely sleeved on the output shaft (120) and meshed with the fourth driving gear (1325); and
a first synchronizer (1327) configured to engage at most one of the third driven gear (1324) and the fourth driven gear (1326) with the output shaft (120).

9. The hybrid power transmission device (100) according to claim 8, wherein a sleeve shaft (121) is loosely sleeved on an outer side of the output shaft (120), the sleeve shaft (121) is selectively engaged with the output shaft (120) via the second clutch (152), and the first driven gear (1312) and the third driven gear (1324) are torsionally sleeved on the sleeve shaft (121).

10. The hybrid power transmission device (100) according to claim 2 or 3, wherein the output shaft (120) is configured to be connected to the first motor (300).

11. The hybrid power transmission device (100) according to claim 10, wherein the first transmission system (130) comprises a third gear set (133) connected between the input shaft (110) and the output shaft (120);
wherein the third gear set (133) selectively transmits power to the output shaft (120) via the second clutch (152).

12. The hybrid power transmission device (100) according to claim 11, wherein the third gear set (133) comprises:
a fifth driving gear (1331) loosely sleeved on the input shaft (110);
a fifth driven gear (1332) loosely sleeved on the output shaft (120) and meshed with the fifth driving gear (1331); and
a second synchronizer (1333) configured to selectively engage the fifth driving gear (1331) with the input shaft (110);
wherein the fifth driven gear (1332) is selectively engaged with the output shaft (120) via the second clutch (152).

13. The hybrid power transmission device (100) according to claim 3, wherein the first clutch (151) and the second clutch (152) are integrated into a dual clutch.

14. The hybrid power transmission device (100) according to claim 13, wherein the output shaft (120) comprises a third shaft section (122) and a fourth shaft section (123), the dual clutch is arranged between the third shaft section (122) and the fourth shaft section (123) to selectively engage the third shaft section (122) with the fourth shaft section (123), and the output gear (900) is loosely sleeved on one of the third shaft section (122) and the fourth shaft section (123).

15. The hybrid power transmission device (100) according to claim 14, wherein the first transmission system (130) comprises a fourth gear set (134) connected between the input shaft (110) and the third shaft section (122), and the fourth shaft section (123) is configured to be connected to the first motor (300).

16. The hybrid power transmission device (100) according to claim 15, wherein the fourth gear set (134) comprises:
a sixth driving gear (1341) torsionally sleeved on the input shaft (110); and
a sixth driven gear (1342) torsionally sleeved on the third shaft section (122) and meshed with the sixth driving gear (1341).

17. The hybrid power transmission device (100) according to claim 1, wherein the output shaft (120) is configured to be connected to an axle via a second transmission system (140), the second transmission system (140) comprises a fifth gear set (141) connected between the output shaft (120) and the axle, and the fifth gear set (141) comprises the output gear (900).

18. A hybrid power system, comprising:
an engine (200);
a first motor (300); and
the hybrid power transmission device (100) according to any one of claims 1 to 17.

19. The hybrid power system according to claim 18, further comprising a second motor (400), wherein the engine (200) and the first motor (300) are configured to transmit power to a first axle (500), and the second motor (400) is configured to output power to a second axle (600).

20. The hybrid power system according to claim 18 or 19, wherein the first motor (300) is a GM motor, and the second motor (400) is a TM motor.

21. A vehicle (1), comprising the hybrid power system according to any one of claims 18 to 20.
